# EUROPEAN PATENT APPLICATION

(11) **EP 4 645 121 A1**
(43) Date of publication of application: **05.11.2025**
(21) Application number: 23910429.2
(22) Date of filing: 22.12.2023
(51) Int. Cl.: G06F 16/957

(54) **INFORMATION DISPLAY METHOD AND APPARATUS, DEVICE, AND MEDIUM**

(30) Priority: 27.12.2022 CN 202211690332
(71) Applicant: Chengdu Guanghexinhao Technology Co., Ltd., Chengdu, Sichuan 610095 (CN)
(72) Inventor: YANG, Ting, Beijing 100028 (CN); HONG, Fukang, Beijing 100028 (CN); MIAO, Sihao, Beijing 100028 (CN); ZHENG, Weiyong, Beijing 100028 (CN)
(74) Representative: Isarpatent
(86) International application number: PCT/CN2023/141237
(87) International publication number: WO 2024/140503

(57) **Abstract**

The present application discloses an information display method and apparatus, a device, and a medium. A client first obtains materials to be rendered, and the materials to be rendered includes at least one resource image and resource description information. When the push information for resources needs to be displayed, in response to a trigger operation on the target object, at least one resource image and resource description information are rendered to generate push information for resources, and the push information for resources is displayed in the client

## Description

### CROSS-REFERENCE TO RELATED APPLICATION(S)

This application claims priority to Chinese Application No. 202211690332.8 filed in Dec. 27, 2022, the disclosure of which is incorporated herein by reference in its entirety.

### FIELD

The present application relates to the technical field of computers, in particular to an information display method and apparatus, a device and medium.

### BACKGROUND

At present, when a short video platform pushes information in a video stream, it usually pushes the information which has been rendered in advance by the server. Related solutions cause greater pressure on the server.

### SUMMARY

In view of this, an embodiment of the present application provides an information display method, and apparatus, a device, and a medium, so as to realize the display of push information for resources by using a real-time rendering technology and reduce the pressure of a server.

In order to achieve the above object, the technical solutions provided by the present application are as follows:
In a first aspect of the present application, there is provided an information display method and the method comprises:
obtaining materials to be rendered, the materials to be rendered including at least one resource image and resource description information;
generate, in response to a trigger operation on a target object, push information for resources by rendering the at least one resource image and the resource description information to;
displaying the push information for resources.

In a third aspect of the present application, there is provided an information display device, the device comprising:
an obtaining unit configured to obtain materials to be rendered, the materials to be rendered including at least one resource image and resource description information;
a generating unit configured to generate push information for resources by rendering the at least one resource image and the resource description information in response to a trigger operation on a target object;
a display unit configured to display the push information for resources.

In a fourth aspect of the present application, there is provided an electronic device comprising: a processor and a memory;
the memory for storing instructions or a computer program;
the processor for executing the instructions or computer program in the memory to cause the electronic device to perform the method of the first aspect.

In a fifth aspect of the present application, there is provided a computer-readable storage medium having instructions stored therein that, when executed on a device, cause the device to perform the method of the first aspect.

In a fifth aspect of the present application, there is provided a computer program product comprising a computer program/instruction that, when executed by a processor, implements the method of the first aspect.

It can be seen that the present application has the following beneficial effects:

In the present application, the client first obtains materials to be rendered, and the materials to be rendered includes at least one resource image and resource description information. When the push information for resources needs to be displayed, in response to a trigger operation on the target object, at least one resource image and resource description information are rendered to generate push information for resources, and the push information for resources is displayed in the client. That is, when the user browses a certain push information for resources, rendering is performed according to the materials to be rendered, and push information for resources is generated instead of obtaining the push information for resources rendered in advance from the server, thereby reducing the pressure on the server.

### BRIEF DESCRIPTION OF THE DRAWINGS

In order to more clearly explain the technical solutions in the embodiments of the present application or related technologies, the drawings that need to be used in the description of the embodiments or related technologies will be briefly introduced below, and it is obvious that the drawings in the following description are only some embodiments described in the present application, and other drawings can be obtained from these drawings without making creative labor for those skilled in the art.
FIG. 1 is a flowchart of an information display method according to an embodiment of the present application.
FIG. 2a is a schematic diagram of basic information provided by an embodiment of the present application;
FIG. 2b is a promotion information display effect diagram according to an embodiment of the present application.
FIG. 3 is a structural diagram of an information display device according to an embodiment of the present application.
FIG. 4 is a schematic structural diagram of an electronic device according to an embodiment of the present application.

### DETAILED DESCRIPTION OF EMBODIMENTS

In order to enable those skilled in the art to better understand the solutions of the present application, the technical solutions in the embodiments of the present application will be clearly and completely described below with reference to the accompanying drawings in the embodiments of the present application, and it is obvious that the described embodiments are only a part of the embodiments of the present application, but not all of the embodiments. Based on the embodiments in the present application, all other embodiments obtained by those skilled in the art without creative work fall within the scope of protection of the present application.

When the relevant short video platform displays push information for resources in the information stream, it usually obtains the pre-rendered push information for resources. Because the server needs to pre-render it, the server is under great pressure and cannot quickly adapt to the user's need to obtain the latest push information for resources, which affects the user experience.

Based on this, an embodiment of the present application provides an information display method, in which materials to be rendered is obtained, and the materials to be rendered includes at least one resource image and resource description information. After receiving the trigger operation on the target object, the at least one resource image and resource description information is rendered to generate push information for resources, and displaying the push information for resources. In the present application, the user can browse the push information for resources through the real-time rendering method, and the server does not need to render in advance, thereby reducing the pressure of the server.

It can be understood that before using the technical solution of each embodiment of the present disclosure, the user should be informed of the type, usage scope, usage scenario, etc. of the personal information involved in an appropriate manner in accordance with relevant laws and regulations, and the authorization of the user should be obtained.

For example, in response to receiving an active request from the user, prompt information is sent to the user to explicitly prompt the user that the operation requested to be performed will require the obtaining and use of the user's personal information. Accordingly, the user can independently select whether or not to provide personal information to software or hardware such as an electronic device, an application program, a server, or a storage medium that performs the operation of the present invention according to the prompt information.

As an optional but non-limiting implementation mode, in response to receiving an active request from the user, the way of sending prompt information to the user may be, for example, a pop-up window, and the prompt information may be presented in a text form in the pop-up window. In addition, the pop-up window can also carry a selection control for the user to choose "agree" or "disagree" to provide personal information to the electronic device.

It is to be understood that the above-described procedures of notifying and obtaining user authorization are merely illustrative and do not limit the implementation forms of the present disclosure, and other methods satisfying relevant laws and regulations may also be applied to the implementation forms of the present disclosure.

In order to facilitate understanding of the technical solutions provided by the embodiments of the present application, the following will be described with reference to the accompanying drawings.

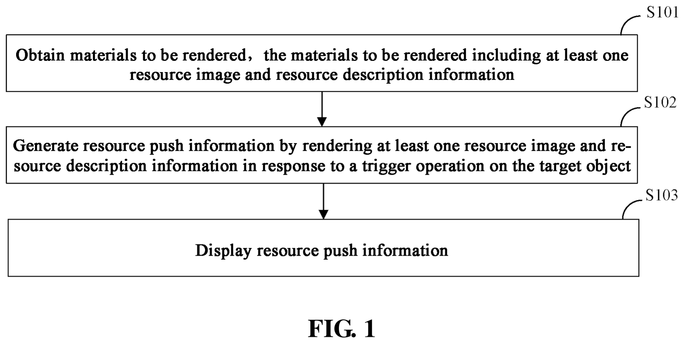

Referring to FIG. 1, the FIG. 1 illustrates an information display method according to an embodiment of the present application, and the method can be executed by a short video client, and the short video client can be installed in an electronic device. Among them, the electronic device may include a device having a communication function such as a mobile phone, a tablet computer, a notebook computer, a desktop computer, an in-vehicle terminal, a wearable electronic device, an all-in-one device, and a smart home device, and may be a device simulated by a virtual machine or a simulator. As shown in FIG. 1, the method may comprise the following steps:
S101: Obtain materials to be rendered.

Wherein the materials to be rendered includes at least one resource image and resource description information. In the present embodiment, the resource may be an item or service to be displayed or pushed, and the item may be a virtual item or a real item. When the resource is a commodity, at least one resource image may include a commodity picture, and the resource description information may include a commodity introduction, a commodity link, preferential information, an interactive identifier corresponding to the commodity, such as a collection identifier, a purchase identifier, and the like. When the resource is a retailer, at least one resource image may include a retailer image, and the resource description information may include a retailer introduction, a retailer link, preferential information, and an interactive identifier corresponding to the retailer, such as a favorite identifier, a focus identifier, and the like.

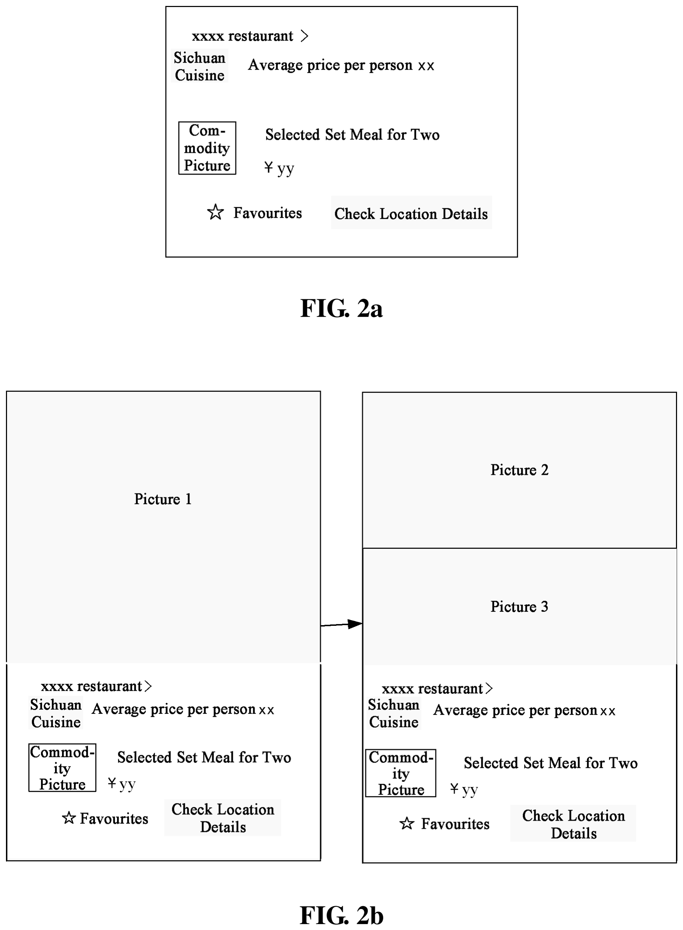

For example, as shown in FIG. 2a, taking the short video platform recommended food as an example, the resource description information includes the store name, cuisine, preferential information, etc.

In the present embodiment, obtaining the materials to be rendered by the client may include:
One is that the client periodically sends an request to the server, and the server sends the materials to be rendered to the client based on the received obtaining request. The obtaining request may include an identification of the materials to be rendered.

Another is that the server may periodically actively send the materials to be rendered to the client.

In another way, after detecting the trigger request of the user, the client sends an obtaining request to the server to obtain the materials to be rendered from the server. Specifically, in response to the target object triggering an operation of starting the client, a data packet including materials to be rendered is preloaded from the server. That is, when the user starts the client, the client may send an obtaining request to the server to request the materials to be rendered from the server through the obtaining request. After receiving the obtaining request, the server sends a data packet including the materials to be rendered to the client.

Typically, when the client is cold booted, packets are preloaded from the server. Among them, client cold start means that when the client starts, there is no corresponding process of the client in the background, and then the system will recreate a new process and assign it to the client. In the specific implementation, the manager can pre-configure data packets corresponding to different push information for resources on the server, and since the data packets include materials to be rendered, not push information for resources generated by pre-rendering, the occupation of storage resources in the server is reduced, and the pressure on the server is reduced.

S102: Generating push information for resources by rendering at least one resource image and resource description information in response to a trigger operation on the target object.

In the present embodiment, the triggering operation on the target object may trigger real-time rendering, and upon receiving the triggering operation on the target object, at least one resource image and resource description information in the materials to be rendered are rendered to generate push information for resources. That is, after detecting an operation that triggers real-time rendering, the real-time rendering process is started.

The resource may be an item or service to be pushed, and the push information for resources is push information corresponding to the item or service, information used for recommending the item or service, and may include video information, image information, copywriting information, interactive identification information, and the like related to the item or service. The target object may be a user who browses the push information for resources through the client, and the triggering operation on the target object may include a sliding operation, a floating operation, a clicking operation, and the like triggered by the user on the client.

In one embodiment of the present disclosure, real-time rendering may be performed to generate push information for resources by: generating a target video by rendering at least one resource image in real time in response to a trigger operation on a target object, and generating rendered resource description information by rendering resource description information in real time; Generating push information for resources according to the target video and the rendered resource description information. That is, in the present embodiment, when performing real-time rendering, at least one resource image and resource description information are respectively rendered, specifically, at least one resource image is rendered in real time to generate a target video, and the resource description information is rendered in real time to generate rendered resource description information. The push information for resources includes a target video and rendered resource description information.

The data packet may include not only the materials to be rendered, but also a video editing file, and the target video generated from the at least one resource image included in the push information for resources is generated from the at least one resource image and the video editing file. The video editing file is used to indicate a video editing attribute corresponding to the target video, and the video editing attribute may include a transition motion effect between at least one resource image, a special effect of the target video, and the like. That is, attributes such as transition motion effects and/or special effects can be added to the target video through the video editing file.

Wherein, generating the rendered resource description information by rendering of the resource description information in real time may include: rendering the resource description information in real time to generate a picture, and displaying the resource description information, such as a copy or an interactive logo for describing the resource, on the picture; Alternatively, the display pattern corresponding to the resource description information is rendered in real time, and the rendered resource description information is generated. Specifically, the display style corresponding to the resource description information may be rendered into a preset display style, and the rendered resource description information may be obtained. Here, the display style may include a font style, a paragraph style, and the like.

In some embodiments, in order to ensure the rendering effect, the rendering mode may be specified in advance so that the client renders according to the specified rendering mode. Specifically, the data packet may further include a configuration file for indicating a rendering mode, and when the client performs rendering, the client renders at least one resource image and resource description information according to the configuration file to generate push information for resources.

Among them, when the client renders and generates push information for resources, it can use a graphics processing unit (GPU) for real-time rendering to improve the rendering rate.

In some embodiments, in order to further improve the user experience, corresponding rendering methods may be determined according to different types of target objects, so that push information for resources corresponding to the target objects can be rendered during rendering. Specifically, obtaining an object type corresponding to a target object; determining a rendering mode corresponding to the object type according to the object type and the configuration file; rendering at least one resource image and resource description information according to a rendering mode corresponding to the object type to generate push information for resources. Wherein, the configuration file may include rendering methods for different object types. For example, when the target object type is the first type, the first push information for resources may be generated during rendering, such as rendering a background corresponding to the push information for resources into blue; when the target object type is the second type, when the second push information for resources is generated by rendering, for example, the background corresponding to the push information for resources may be rendered red. That is, the push information for resources is rendered in real time through the configuration file to meet the requirements of different types of objects. Compared with traditional rendering, different versions of the push information for resources need to be generated on the server side, so that when the client requests, the push information for resources that meets the requirements can be sent to the client side, which not only saves the resources of the server, but also improves the rendering efficiency.

In some embodiments, if the rendering mode needs to be updated, the configuration file can be updated, so that when the user browses again, the client can render at least one resource image and resource description information according to the updated configuration file to generate new push information for resources. Compared with the traditional rendering mode, the server needs to regenerate a new version of the push information for resources and send it to the client for playback, but the present application only needs to modify the configuration file without the server to regenerate and send it, which not only reduces the pressure of the server, but also improves the update speed. Specifically, in a case where the configuration file is updated, obtaining the materials to be rendered includes preloading the data packet from the server in response to the target object triggering an operation on starting the client. Wherein the data packet includes an updated configuration file for indicating the updated rendering mode. Among them, the configuration file stored by the server can be updated by a user with editing authority through the back-end platform.

In some embodiments, when it is necessary to add some new interaction methods for push information for resources, the new interaction methods may be added in the configuration file. Wherein the interaction mode indicates an interaction mode between the target object and the push information for resources on the client or for an operation on the terminal device. Wherein the client is used for browsing promotion information and is installed on the terminal device. Among them, the new interaction method can be to combine the capabilities of terminal equipment (such as gyroscope, gravity sensing, etc.) to achieve a richer and more novel interactive experience. For example, when the user sloshes the terminal device, the rendered push information for resources may have a dynamic sloshing effect according to the sloshing of the user. Among them, the interaction mode can be added by the user with editing authority through the configuration file stored in the server by the back-end platform.

In some embodiments, the to-be-rendered materials may also be updated, and in the event that the to-be-rendered materials is updated, a data packet including the updated to-be-rendered materials is preloaded from the server in response to the target object triggering an operation of starting the client. After obtaining the data packet, the client can use the updated materials to be rendered to perform real-time rendering, and generate push information for resources, so as to display the latest push information for resources for the user. Wherein, the materials to be rendered stored by the server can be updated by a user with editing authority through the back-end platform.

S103: Display push information for resources.

In the present embodiment, when the real-time rendered push information for resources is obtained, the push information for resources may be displayed on the information interface of the client.

Here, the target video and the rendered resource description information in the push information for resources may be displayed separately, specifically, the target video is played in the first layer, and the rendered resource description information is maintained and displayed in the second layer while the target video is played. Wherein the second layer is located on the first layer. That is, the target video may serve as a background of the rendered resource description information. The data packet may further include layer information corresponding to the push information for resources, specifically, a first identifier corresponding to each push information for resources (such as a target video and rendered resource description information), a second identifier corresponding to each layer, and a correspondence relationship between the first identifier and the second identifier, so that the push information for resources corresponding to the first identifier is displayed using the layer corresponding to the second identifier.

The data packet may further include layer parameter information corresponding to each layer, such as layer transparency, so that each push information for resources is displayed through each layer according to the corresponding layer parameter information.

For example, in the promotion information display effect diagram shown in FIG. 2b, the push information for resources includes a target video generated from three pictures, wherein the first video frame includes a picture 1, the second video frame includes a picture 2 and a picture 3, and the rendered resource description information is displayed on layers of the first video frame and the second video frame.

It can be seen that the client first obtains materials to be rendered, and the materials to be rendered includes at least one resource image and resource description information. When the push information for resources needs to be displayed, in response to a trigger operation on the target object, at least one resource image and resource description information are rendered to generate push information for resources, and the push information for resources is displayed in the client. That is, when the user browses a certain push information for resources, the user will render according to the materials to be rendered to generate the push information for resources, instead of obtaining the pre-rendered push information for resources from the server, and the pressure on the server is reduced by real-time rendering.

Based on the above method embodiments, embodiments of the present application further provide an information display device and an electronic device, which will be described below with reference to the accompanying drawings.

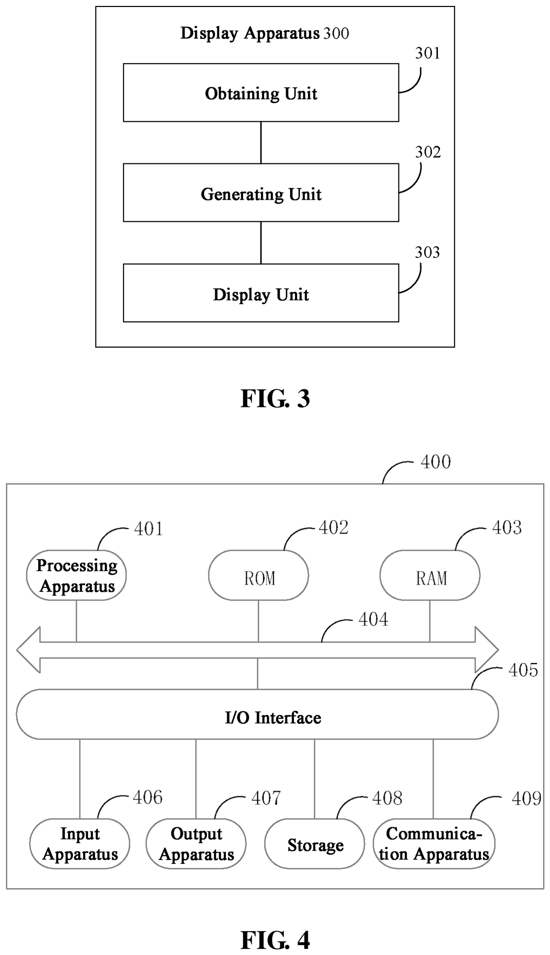

Referring to FIG. 3, which is a structural diagram of an information display device according to an embodiment of the present application, as shown in FIG. 3, the device 300 includes an obtaining unit 301, a generating unit 302, and a display unit 303.

The obtaining unit 301 is configured to obtain materials to be rendered, and the materials to be rendered includes at least one resource image and resource description information;

A generating unit 302 configured to generate push information for resources by rendering the at least one resource image and the resource description information in response to a trigger operation on a target object;
The display unit 303 is configured to display the push information for resources.

In some embodiments, the generating unit 302 is specifically configured to perform real-time rendering on the at least one resource image, generate a target video, and perform real-time rendering on the resource description information, and generate rendered resource description information in response to a trigger operation on the target object. Generating the push information for resources according to the target video and the rendered resource description information.

In some embodiments, the display unit 303 is specifically configured to play the target video in a first layer, and while playing the target video, the rendered resource description information is maintained and displayed in a second layer, and the second layer is located on the first layer.

In some embodiments, the obtaining unit 301 is specifically configured to preload a data packet from a server in response to the target object triggering an operation of starting a client, and the data packet includes the materials to be rendered.

In some embodiments, the push information for resources includes a target video generated according to the at least one resource image, the data packet includes a video editing file, the target video is generated according to the at least one resource image and the video editing file, and the video editing file is used to indicate a video editing attribute corresponding to the target video.

In some embodiments, the data packet includes a configuration file, and the generating unit 302 is specifically configured to generate push information for resources by rendering the at least one resource image and the resource description information according to the configuration file, and the configuration file is used to indicate a rendering mode.

In some embodiments, the obtaining unit 301 is further configured to obtain an object type corresponding to the target object before generating push information for resources by rendering the at least one resource image and the resource description information according to the description file.

The generating unit 302 is specifically configured to determine a rendering mode corresponding to the object type according to the object type and the configuration file; generate push information for resources by rendering the at least one resource image and the resource description information according to a rendering mode corresponding to the object type.

In some embodiments, in a case where the configuration file is updated, the obtaining unit 301 is specifically configured to preload a data packet from the server in response to the target object triggering an operation of starting the client, the data packet including the updated configuration file, and the updated configuration file is used to indicate the updated rendering mode.

It should be noted that the specific implementation of each unit in the present embodiment can be referred to the relevant description in the above method embodiment. The division of units in the embodiments of the present application is schematic, and is only a logical function division, and there may be another division mode when actually implemented. Each functional unit in the embodiment of the present application may be integrated in one processing unit, each unit may physically exist alone, or two or more units may be integrated in one unit. For example, in the above-described embodiment, the processing unit and the transmission unit may be the same unit or different units. The above integrated unit may be implemented in the form of hardware or software functional unit.

Referring to FIG. 4, there is shown a schematic structural diagram of an electronic device 400 suitable for implementing an embodiment of the present disclosure. The terminal device in the embodiment of the present disclosure may include, but is not limited to, a mobile terminal such as a mobile phone, a notebook computer, a digital broadcast receiver, a PDA (Personal Digital Assistant), a PAD (Tablet Computer), a PMP (Portable Multimedia Player), an in-vehicle terminal (for example, an in-vehicle navigation terminal), and the like, and a fixed terminal such as a digital TV, a desktop computer, and the like. The electronic device illustrated in FIG. 4 is merely an example, and should not impose any limitation on the functions and scope of use of the embodiments of the present disclosure.

As shown in FIG. 4, the electronic device 400 may include a processing device (such as a central processing unit, a graphics processor, or the like) 401 that may perform various appropriate actions and processes according to a program stored in a read-only memory (ROM) 402 or a program loaded from a storage device 408 into a random access memory (RAM) 403. The RAM 403 also stores various programs and data necessary for the operation of the electronic device 400. The processing apparatus 401, the ROM 402, and the RAM 403 are connected to each other by a bus 404. An input/output (I/O) interface 405 is also connected to the bus 404.

Generally, the following devices may be connected to the I/O interface 405: an input apparatus 406 including, for example, a touch screen, a touch pad, a keyboard, a mouse, a camera, a microphone, an accelerometer, a gyroscope, and the like; An output apparatus 407 including, for example, a liquid crystal display (LCD), a speaker, a vibrator, or the like; A storage 408 including, for example, a magnetic tape, a hard disk, or the like; And a communication apparatus 409. The communication apparatus 409 may allow the electronic apparatus 400 to communicate wirelessly or wired with other devices to exchange data. Although FIG. 4 illustrates an electronic device 400 with various devices, it should be understood that it is not required that all of the devices shown be implemented or provided. More or fewer devices may alternatively be implemented or provided.

In particular, according to embodiments of the present disclosure, the processes described above with reference to the flowcharts may be implemented as computer software programs. For example, embodiments of the present disclosure include a computer program product comprising a computer program carried on a non-transitory computer-readable medium, the computer program including program code for performing the method shown in the flowchart. In such embodiments, the computer program may be downloaded and installed from the network via the communication apparatus 409, or installed from the storage 408, or installed from the ROM 402. When the computer program is executed by the processing apparatus 401, the above-described functions defined in the method of the embodiment of the present disclosure are performed.

The electronic device provided by the embodiment of the present disclosure belongs to the same inventive concept as the method provided by the above-described embodiment, and the technical details not described in detail in the present embodiment can be referred to in the above-described embodiment, and the present embodiment has the same beneficial effects as the above-described embodiment.

Embodiments of the present disclosure provide a computer storage medium on which a computer program is stored, and when executed by a processor, the program implements the method provided by the above embodiment.

The computer-readable medium of the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or a combination of any of the above. More specific examples of computer-readable storage media may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact magnetic disk read-only memory (CD-ROM), an optical storage device, a magnetic storage device, or any suitable combination of the foregoing. In the present disclosure, a computer-readable storage medium may be any tangible medium containing or storing a program that may be used by or in conjunction with an instruction execution system, apparatus, or device. Whereas in the present disclosure, a computer-readable signal medium may include a data signal propagated in a baseband or as part of a carrier wave, carrying computer-readable program code therein. Such propagated data signals may take a variety of forms, including, but not limited to, electromagnetic signals, optical signals, or any suitable combination of the foregoing. The computer-readable signal medium may also be any computer-readable medium other than a computer-readable storage medium that may transmit, propagate, or transmit a program for use by or in connection with an instruction execution system, apparatus, or device. The program code contained on the computer-readable medium may be transmitted using any suitable medium, including, but not limited to, wires, optical cables, RF (radio frequency), or the like, or any suitable combination of the foregoing.

In some embodiments, the client, server may communicate using any currently known or future developed network protocol such as HTTP (Hyper Text Transfer Protocol), and may be interconnected with any form or medium of digital data communication (e.g., a communication network). Examples of communication networks include local area networks ("LAN"), wide area networks ("WAN"), the Internet (e.g., the Internet), and end-to-end networks (e.g., ad hoc end-to-end networks), as well as any currently known or future-developed networks.

The computer-readable medium may be included in the electronic device; It may also exist alone without being assembled into the electronic device.

The computer-readable medium carries one or more programs, and when the one or more programs are executed by the electronic device, the electronic device can execute the method.

Computer program code for performing the operations of the present disclosure may be written in one or more programming languages, or combinations thereof, including, but not limited to, object-oriented programming languages such as Java, Smalltalk, C + +, but also conventional procedural programming languages such as the "C" language or similar programming languages. The program code may be executed entirely on the user's computer, partially on the user's computer, as a standalone software package, partially on the user's computer and partially on a remote computer, or entirely on a remote computer or server. In cases involving a remote computer, the remote computer may be connected to the user computer through any kind of network, including a local area network (LAN) or a wide area network (WAN), or may be connected to an external computer (e.g., using an Internet service provider to connect over the Internet).

The flowcharts and block diagrams in the drawings illustrate the architecture, functionality, and operation on possible implementations of systems, methods, and computer program products in accordance with various embodiments of the present disclosure. In this regard, each block in the flowchart or block diagram may represent a module, program segment, or portion of code that contains one or more executable instructions for implementing a specified logical function. It should also be noted that, in some alternative implementations, the functions noted in the blocks may also occur in a different order than that noted in the figures. For example, two blocks represented in succession may actually be executed substantially in parallel, and they may sometimes be executed in reverse order, depending on the function involved. It is also noted that each block in the block diagrams and/or flowchart diagrams, and combinations of blocks in the block diagrams and/or flowchart diagrams, may be implemented with a dedicated hardware-based system that performs the specified functions or operations, or may be implemented with a combination of dedicated hardware and computer instructions.

The units described in the embodiments of the present disclosure may be implemented by software or hardware. Here, the name of the unit/module does not constitute a limitation of the unit itself in some cases.

The functions described above herein may be performed, at least in part, by one or more hardware logic components. For example, and without limitation, exemplary types of hardware logic components that may be used include: a field programmable gate array (FPGA), an application specific integrated circuit (ASIC), an application specific standard product (ASSP), a system-on-chip (SOC), a complex programmable logic device (CPLD), and the like.

In the context of the present disclosure, a machine-readable medium may be a tangible medium that may contain or store a program for use by or in conjunction with an instruction execution system, apparatus, or apparatus. The machine readable medium may be a machine readable signal medium or a machine readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include one or more line-based electrical connections, portable computer disks, hard disks, random access memory (RAM), read-only memory (ROM), erasable programmable read-only memory (EPROM or flash memory), optical fibers, handy compact disk read-only memory (CD-ROM), optical storage devices, magnetic storage devices, or any suitable combination of the foregoing.

It should be noted that, in the present specification, each embodiment is described in a stepwise manner, and each embodiment focuses on differences from other embodiments, and the same and similar parts between the embodiments may be referred to each other. As for the system or device disclosed in the embodiment, since it corresponds to the method disclosed in the embodiment, the description is relatively simple, and the description of the method section may be described for related information.

It should be understood that, in the present application, "at least one" refers to one or more, and "a plurality" refers to two or more. "And/or" is used to describe the association relationship of the association object, and means that there can be three relationships. For example, "A and/or B" can mean that only A exists, only B exists, and A and B exist at the same time, where A and B may be singular or plural. The character "/" generally indicates that the associated objects before and after are an "or" relationship. "At least one of the following" or a similar expression thereof refers to any combination of these items, including any combination of single or plural items. For example, at least one (s) of a, b, or c may represent: a, b, c, "a and b", "a and c", "b and c", or "a and b and c", wherein a, b, c may be single or multiple.

It should also be noted that, herein, relational terms such as first and second are used only to distinguish one entity or operation from another entity or operation, and do not necessarily require or imply any such actual relationship or order between the entities or operations. Moreover, the terms "comprising," "comprising," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element defined by the statement "comprising a" does not preclude the presence of additional identical elements in a process, method, article, or apparatus comprising the element.

The steps of the methods or algorithms described in connection with the embodiments disclosed herein may be implemented directly in hardware, processor-executed software modules, or a combination of both. The software module may be placed in random access memory (RAM), memory, read-only memory (ROM), electrically programmable ROM, electrically erasable programmable ROM, registers, hard disk, removable magnetic disk, CD-ROM, or any other form of storage medium known in the art.

The above description of the disclosed embodiments enables those skilled in the art to implement or use the present application. Various modifications to these embodiments will be apparent to those skilled in the art, and the general principles defined herein may be implemented in other embodiments without departing from the spirit or scope of the present application. Accordingly, the present application will not be limited to the embodiments shown herein, but is intended to be accorded the widest scope consistent with the principles and novel features disclosed herein.

## Claims

1. An information display method comprising:
obtaining materials to be rendered, the materials to be rendered including at least one resource image and resource description information;
generating, in response to a trigger operation on a target object, push information for resources by rendering the at least one resource image and the resource description information;
displaying the push information for resources.

2. The method of claim 1, wherein generating, in response to the trigger operation on the target object, the push information for resources by rendering the at least one resource image and the resource description information comprises:
generating, in response to a trigger operation on a target object, a target video by rendering the at least one resource image in real time, and generating rendered resource description information by rendering the resource description information in real time;
generating, according to the target video and the rendered resource description information, the push information for resources.

3. The method of claim 1, wherein displaying the push information for resources comprises:
playing the target video in a first layer, while playing the target video, maintaining display of the rendered resource description information in a second layer, the second layer being located on the first layer.

4. The method of claim 1, wherein obtaining the materials to be rendered comprises:
preloading, in response to the target object triggering an operation of starting the client, a data packet from a server, the data packet including the materials to be rendered.

5. The method according to claim 4, wherein the push information for resources includes a target video generated according to the at least one resource image, the data packet includes a video editing file, the target video is generated according to the at least one resource image and the video editing file, and the video editing file is used to indicate a video editing attribute corresponding to the target video.

6. The method of claim 4, wherein the data packet comprises a configuration file, and generating the push information for resources by rendering the at least one resource image and the resource description information comprises:
generating the push information for resources by rendering the at least one resource image and the resource description information according to the configuration file, the configuration file being used to indicate a rendering mode.

7. The method of claim 6, wherein before generating the push information for resources by rendering the at least one resource image and the resource description information according to the configuration file, the method further comprises:
obtaining an object type corresponding to the target object;
generating the push information for resources by rendering the at least one resource image and the resource description information according to the configuration file comprises:
determining, according to the object type and the configuration file, a rendering mode corresponding to the object type;
generating the push information for resources by rendering the at least one resource image and the resource description information according to the rendering mode corresponding to the object type.

8. The method of claim 1, wherein, in case of a configuration file update, obtaining the materials to be rendered comprises:
preloading, in response to the target object triggering an operation of starting a client, a data packet from the server, the data packet including an updated configuration file, the updated configuration file being used to indicate an updated rendering mode.

9. An information display apparatus, comprising:
an obtaining unit configured to obtain materials to be rendered, the materials to be rendered including at least one resource image and resource description information;
a generating unit configured to generate, in response to a trigger operation on a target object, push information for resources by rendering the at least one resource image and the resource description information;
a display unit configured to display the push information for resources.

10. An electronic device, comprising: a processor and a memory;
the memory for storing instructions or a computer program;
the processor for executing the instructions or computer program in the memory to cause the electronic device to perform the method of any of claims 1-8.

11. A computer-readable storage medium having instructions stored therein that, when executed on a device, cause the device to perform the method of any one of claims 1-8.

12. A computer program product comprising computer programs/instructions executed by a processor to perform the method of any of claims 1-8.
